# FASCICULE DE BREVET EUROPEEN

(11) **EP 1 133 408 B1**
(45) Date de publication et mention de la délivrance du brevet: **17.08.2005**
(21) Numéro de dépôt: 00962596.3
(22) Date de dépôt: 11.09.2000
(51) Int. Cl.: B60N 2/427

(54) **ASSISE D'UN SIEGE DE VEHICULE AUTOMOBILE COMPORTANT UNE TRAVERSE D'ANTI-SOUS-MARINAGE**
SITZTEIL EINES KRAFTFAHRZEUGSITZES MIT EINER TRAVERSE ZUR HINDERUNG DES ABTAUCHENS
MOTOR VEHICLE SEAT PART COMPRISING AN ANTI-SUBMARINING CROSSPIECE

(30) Priorité: 16.09.1999 FR 9911710
(43) Date de publication de la demande: 19.09.2001
(73) Titulaire: FAURECIA SIEGES D'AUTOMOBILE S.A., 92100 Boulogne-Billancourt (FR)
(72) Inventeur: LAPORTE, Alain, F-78280 Guyancourt (FR)
(74) Mandataire: Bentz, Jean-Paul
(86) Numéro de dépôt international: PCT/FR2000/002496
(87) Numéro de publication internationale: WO 2001/019641

(56) Documents cités:
- EP-A- 0 965 479
- WO-A-94/12806
- DE-A- 3 841 688
- DE-A- 4 233 155
- FR-A- 2 101 292
- FR-A- 2 747 080
- FR-A- 2 747 081
- FR-A- 2 754 498

## Description

L'invention concerne une assise de siège de véhicule automobile comportant une traverse d'anti-sous-marinage (cf. par exemple FR-A-2 747 080, correspondant au préambule de la revendication indépendante).

Classiquement, les ceintures de sécurité présentent une partie oblique et une partie ventrale qui sont respectivement appliquées avec une certaine tension contre le buste et le bassin de l'utilisateur du siège.

Lorsqu'un choc sur le véhicule tend à projeter l'utilisateur vers l'avant du véhicule, par exemple lors d'un accident, la ceinture est alors bloquée, de manière connue en soi, pour maintenir le plus fermement possible l'utilisateur contre le siège. Mais l'utilisateur subit alors une forte décélération et, entraîné par son inertie, se déplace cependant par rapport à la ceinture. Ce déplacement peut provoquer des graves lésions du corps, en particulier des lésions abdominales, lorsque le bassin de l'utilisateur tend à passer au-dessous de la partie ventrale de la ceinture, par glissement des fesses de l'utilisateur sur l'assise. Ce phénomène est généralement appelé sous-marinage.

Pour y remédier, il est déjà connu d'utiliser une barre transversale, encore appelée "traverse d'anti-sous-marinage", qui est placée transversalement dans l'assise, sous les coussins de siège. Cette barre est prévue pour limiter, dans le cas indiqué ci-dessus, le déplacement du bassin de l'utilisateur vers l'avant du siège, et elle est conçue de manière à pouvoir se déformer sous l'effort exercé par le bassin, pour absorber une partie de l'énergie de déplacement. Mais la possibilité de déplacement correspondant à la déformation de la barre est alors faible. Il en résulte que, avec une absorption d'énergie forte sur un petit déplacement, les efforts sur le bassin du passager sont nécessairement importants.

Pour améliorer ce système, il a été prévu, notamment par ledit document FR-A-2747080, d'utiliser une traverse d'anti-sous-marinage qui est placée transversalement dans l'assise, qui se déploie lors du choc pour faire obstacle au déplacement du bassin de l'utilisateur, et qui autorise ensuite un certain déplacement du bassin sous contrôle de moyens d'absorption d'énergie.

Dans le système décrit dans ce document, la traverse est reliée par ses extrémités sur des supports formés de deux biellettes de forme triangulaire, montées pivotantes sur l'armature d'assise. En position de repos, la traverse est située au niveau des fesses de l'utilisateur, et lors du choc, la traverse bascule vers le haut et vers l'avant de l'assise, sous l'action d'un prétensionneur pyrotechnique de la ceinture agissant sur les biellettes de support, vers une position déployée, de manière à former un obstacle au déplacement des fesses de l'utilisateur vers l'avant, en évitant ainsi le passage du bassin sous la partie ventrale de la ceinture.

Lorsque la traverse est en position déployée, le bassin de l'utilisateur exerce sur celle-ci une poussée qui risquerait de provoquer une compression excessive des lombaires de l'utilisateur. Il est alors prévu d'utiliser des moyens de dissipation d'énergie pour limiter l'effort transmis par la traverse à l'utilisateur en permettant, à partir d'un seuil prédéterminé, de rétracter progressivement la traverse dans l'assise, en retenant le bassin mais en autorisant cependant un certain déplacement de celui-ci.

Les moyens de dissipation d'énergie sont des rainures oblongues rectilignes, réalisées selon un des cotés des biellettes triangulaires, dans lesquelles coulissent les extrémités de la traverse. Comme les dites rainures ont une largeur sensiblement inférieure à la dimension transversale des extrémités de la traverse, la dissipation d'énergie est obtenue par déformation des bords de la rainure par les extrémités de la traverse, à partir d'un seuil déterminé.

Le déploiement de la traverse est provoqué par le pivotement commandé des biellettes vers l'avant du siège, jusqu'à ce qu'elles viennent en butée de pivotement par rapport à l'assise, puis l'amortissement est obtenu lorsque la traverse d'anti-sous-marinage se déplace elle-même par rapport aux biellettes.

Ce système nécessite donc l'emploi de plusieurs pièces pour commander le déplacement de la barre au moment du choc, ainsi que l'utilisation de moyens de commande spécifiques, tels que le prétensionneur pyrotechnique mentionné ci-dessus.

Par ailleurs, puisque, lors d'un choc, il y a d'abord déploiement de la traverse, la phase d'absorption d'énergie n'intervient qu'en second lieu, donc avec au moins un léger retard. Egalement, le déplacement de la traverse dans les rainures risque d'être perturbé par exemple si la traverse elle-même est déformée avant qu'elle soit effectivement utilisée, ou au moment du choc.

La présente invention a pour but d'éviter ces inconvénients, et vise à proposer un système de traverse d'anti-sous-marinage plus simple et donc moins coûteux. Elle vise aussi à assurer l'absorption d'énergie du choc le plus tôt possible.

Avec ces objectifs en vue, l'invention a pour objet une assise d'un siège de véhicule automobile, comportant une traverse d'anti-sous-marinage pour limiter le déplacement du bassin d'un utilisateur vers l'avant du siège, la traverse s'étendant transversalement à l'armature d'assise et pouvant se déplacer vers l'avant (à partir d'une position de repos ou de déploiement), tout en exerçant des efforts de retenue du bassin lors de son déplacement vers l'avant du siège, l'assise comportant à cet effet des moyens de dissipation d'énergie pour contrôler, à partir d'un seuil prédéterminé, les dits efforts transmis par la traverse à l'occupant du siège, les extrémités de la traverse étant liées à des biellettes montées pivotantes sur l'armature d'assise.

Selon l'invention, l'assise du siège est caractérisée en ce que les extrémités de la traverse sont fixées rigidement à l'extrémité supérieure des biellettes, et la trajectoire de la traverse lors de son mouvement vers l'avant à l'encontre de l'effort de retenue exercé par les moyens de dissipation d'énergie, est un arc de cercle, défini par un pivotement des biellettes vers l'avant.

Comme on le comprendra mieux par la suite, l'invention permet de simplifier considérablement le système, en évitant des mouvements relatifs de la traverse par rapport aux biellettes elles-mêmes pivotantes, puisque selon l'invention, les extrémités de la traverse sont fixées rigidement aux biellettes, et c'est l'ensemble forme par les biellettes et la traverse qui pivote d'un seul tenant lors des mouvements faisant suite à un choc.

Selon une première disposition particulière, la position de repos de la traverse est déterminée de manière que la traverse soit soumise aux efforts exercés par le bassin de l'utilisateur dés que les dits efforts atteignent le dit seuil et les dits moyens de dissipation d'énergie sont interposés entre la traverse et l'armature d'assise et conformés de manière à agir dès que la traverse commence à se déplacer sous l'effet des forces exercées par l'utilisateur.

La traverse subit alors, en cas d'accident, un déplacement vers l'avant provoqué par les efforts exercés sur celle-ci par le bassin de l'utilisateur qui, dans un tel cas, tend à s'enfoncer dans le siège. On limite ainsi la poussée du bassin sur la traverse à un seuil prédéterminé, de sorte que, lors du déplacement, la traverse est maintenue au contact des fesses de l'utilisateur, tout en autorisant un déplacement contrôlé et progressif du bassin.

Les moyens de dissipation d'énergie agissent en sens inverse des dits efforts, en opposant au déplacement de la traverse une résistance suffisante pour dissiper progressivement, par exemple selon une variation linéaire, l'énergie due à la brusque décélération du corps de l'utilisateur, mais autorisant quand même le déplacement de la traverse pour éviter des lésions des lombaires de l'utilisateur sous des efforts de compression trop élevés.

Selon un premier mode de réalisation, les moyens de dissipation d'énergie comportent des éléments extensibles par déformation plastique, reliant la traverse à l'armature d'assise, ces éléments étant disposés de manière à autoriser le déplacement de la traverse vers l'avant du siège lorsqu'ils s'allongent, et conformés de manière à s'allonger en se déformant plastiquement lorsque l'effort exercé sur la traverse atteint le dit seuil.

Préférentiellement, on utilisera un élément extensible de chaque côté de l'assise, de manière à assurer autant que possible un déplacement de la traverse parallèle à elle-même, en limitant les risques de déhanchement ou arc-boutement de la traverse par rapport aux biellettes pivotantes et à l'armature d'assise.

Ces éléments extensibles sont fixés de préférence d'une part sur la traverse, ou près de l'extrémité des biellettes, et d'autre part sur l'armature d'assise, vers l'arrière de celle-ci. Cette disposition permet de donner une longueur suffisante aux dits éléments extensibles, et donc de leur conférer également une capacité d'allongement suffisante. De plus, ils sont préférentiellement placés contre les flasques latéraux de l'armature d'assise, et présentent de ce fait un encombrement limité.

Chaque élément extensible est préférentiellement constitué d'une bande de feuillard, par exemple en tôle d'acier, soit ondulée transversalement, soit comportant des découpes transversales.

Dans le cas de la bande ondulée, l'absorption d'énergie correspond à l'énergie nécessaire pour redresser, c'est à dire aplanir, la bande. On notera que le terme ondulation doit se comprendre de manière large, englobant toutes formes données à la bande par des pliages ou cintrages lui conférant une distance entre extrémités réduite par rapport à la longueur réelle de la bande.

Dans le cas d'une bande avec des découpes transversales, il s'agit de l'énergie nécessaire à déformer la bande en restant sensiblement dans son plan, la manière dont la bande se déforme étant en quelque sorte initiée et contrôlée par la disposition et la forme des découpes, qui comportent par exemple des incisions réalisées dans la partie axialement médiane de la bande et non débouchantes sur les bords de la bande, et qui s'écartent par déformation des dits bords lors de l'allongement de la bande, comme on le verra par la suite.

Selon un deuxième mode de réalisation, les moyens de dissipation d'énergie comportent une rainure réalisée dans un flasque de l'armature d'assise, ou dans une des biellettes, dans laquelle est inséré un pion solidaire d'une des biellettes, respectivement d'un flasque d'armature d'assise, la largeur de la rainure étant sensiblement inférieure à la dimension transversale du pion, de sorte que le pion se déplace dans la rainure lors du pivotement de la biellette, en déformant les bords de la rainure. La dissipation de l'énergie est alors réalisée de manière similaire à ce qui a été décrit dans la partie introductive de ce mémoire, mais par des moyens différents. L'encombrement du système dans ce mode de réalisation est alors réduit et son montage particulièrement simplifié, ainsi qu'on le comprendra bien par la suite.

Selon une deuxième disposition particulière, les moyens de dissipation d'énergie comportent au moins un vérin pyrotechnique à dissipation d'énergie, reliant la traverse à l'armature d'assise de manière que dans une première phase, le vérin déplace la traverse vers l'arrière puis, dans une deuxième phase, autorise le déplacement de la traverse vers l'avant en dissipant l'énergie fournie par la poussée du bassin sur la traverse.

D'autres caractéristiques et avantages apparaîtront dans la description qui va suivre de différents modes de réalisation d'une assise de siège conforme à l'invention.

On se reportera aux dessins annexés dans lesquels :
- la figure 1 est une vue schématique d'un siège conforme à l'invention et de son utilisateur, en position d'utilisation courante,
- la figure 2 est une vue correspondante lors d'un choc ayant conduit à un déplacement de l'usager vers l'avant,
- la figure 3 est une vue en perspective de l'armature d'assise du siège avec la traverse anti-sous-marinage dans la position d'utilisation courante du siège,
- la figure 4 est une vue de l'armature d'assise illustrant la position de la traverse d'anti-sous-marinage après un choc,
- les figures 5 et 6 sont des vues correspondantes dans le cas d'une variante de réalisation des moyens d'absorption d'énergie,
- les figures 7 et 8 montrent en perspectives les bandes déformables utilisées comme moyens d'absorption d'énergie respectivement dans les deux variantes précitées,
- les figures 9 et 10 sont des vues en perspective du deuxième mode de réalisation de l'invention.
- les figures 11 et 12 illustrent une variante de réalisation dans le cas de la disposition utilisant des vérins pyrotechniques à dissipation d'énergie.

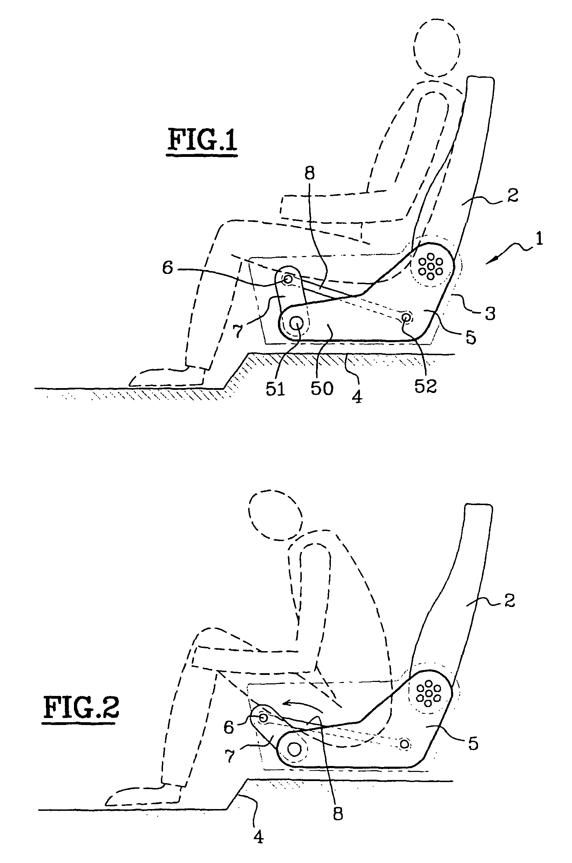

Le siège 1 de véhicule automobile, représenté de manière schématique sur les figures 1 et 2, comporte un dossier 2 articulé sur l'assise 3, celle-ci étant fixée sur le plancher 4 du véhicule automobile de manière connue en soi, par exemple par l'intermédiaire de glissières permettant un réglage longitudinal de la position du siège.

L'assise 3 comporte une armature d'assise 5 et une traverse d'anti-sous-marinage 6, par exemple un tube, qui s'étend transversalement entre les flasques latéraux 50 de l'armature d'assise. La traverse 6 est montée à l'extrémité supérieure de deux biellettes 7 montées pivotantes par rapport à l'armature 5. Les biellettes sont par exemple montées pivotantes sur une traverse de liaison avant 51 reliant les deux flasques 50.

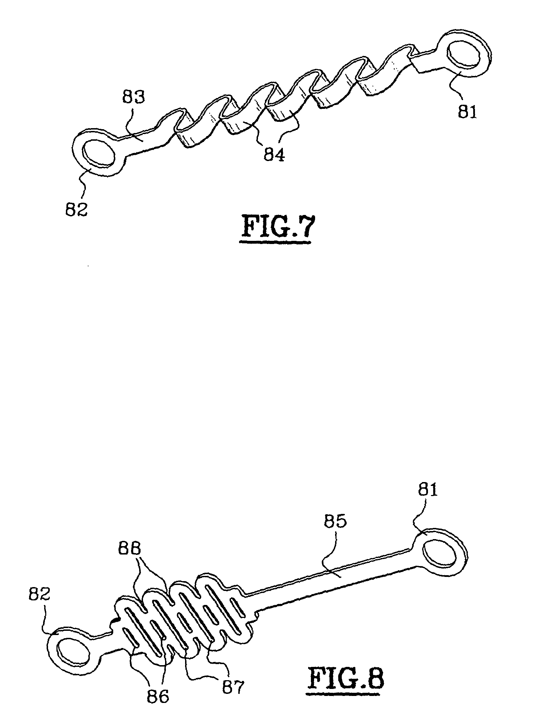

Dans le mode de réalisation illustré sur les figures 1 à 8, la traverse anti-sous-marinage 6 est par ailleurs reliée à l'assise et maintenue en position, par deux éléments extensibles 8 constituants des moyens de dissipation d'énergie, ou absorbeurs d'énergie, dont une extrémité avant 81 est formée en anneau placé directement sur la traverse anti-sous-marinage 6 et l'autre extrémité 82, vers l'arrière, est reliée de même à l'arrière de l'assise, par exemple sur une traverse de liaison arrière 52 reliant les deux flasques 50.

Comme on l'aura déjà compris, en cas de choc frontal du véhicule, le bassin de l'utilisateur du siège se déplace vers l'avant et vient appuyer sur la traverse anti-sous-marinage 6. L'effort de poussée déplace la traverse vers l'avant par pivotement des biellettes 7, vers la position indiquée figures 2, 4 et 6, en provoquant l'allongement des éléments extensibles 8, qui subissent une déformation plastique absorbant l'énergie cinétique du corps de l'utilisateur.

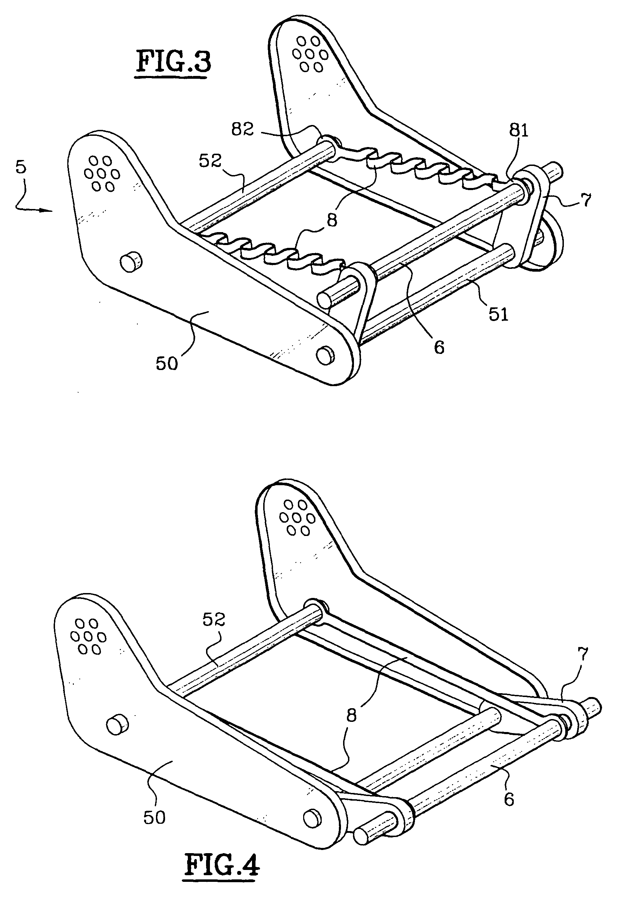

Les éléments extensibles 8 sont constitués, dans une première variante représentée figures 3, 4 et 7, par une bande de feuillard ondulée 83, par exemple en acier. Les ondulations représentées sur les figures peuvent être obtenues par exemple par des cintrages alternés d'un feuillard plat d'origine. Toutefois, la forme, le nombre et l'amplitude des ondulations pourront être modifiés. On pourra notamment par exemple faire varier le pas ou l'amplitude des ondulations sur un élément 8, pour obtenir un effet d'absorption d'énergie progressif.

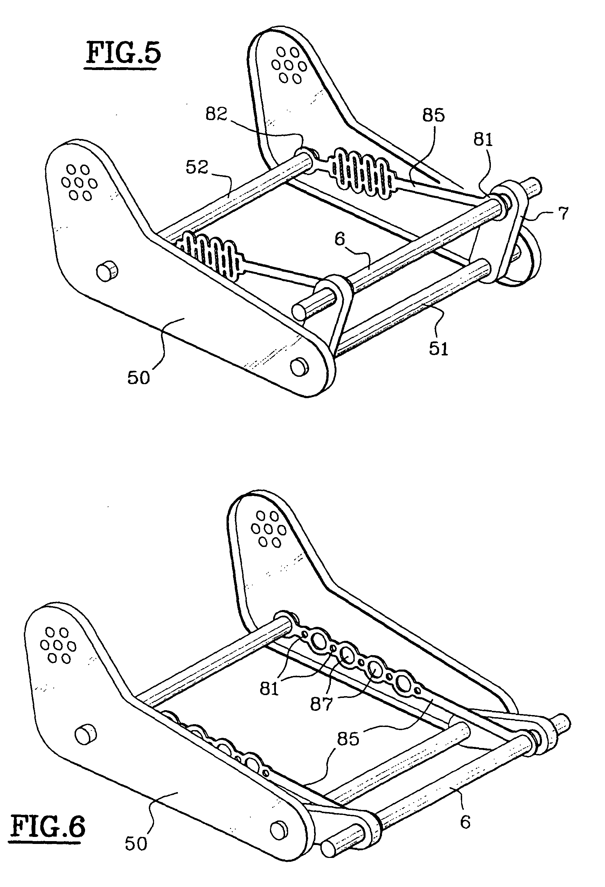

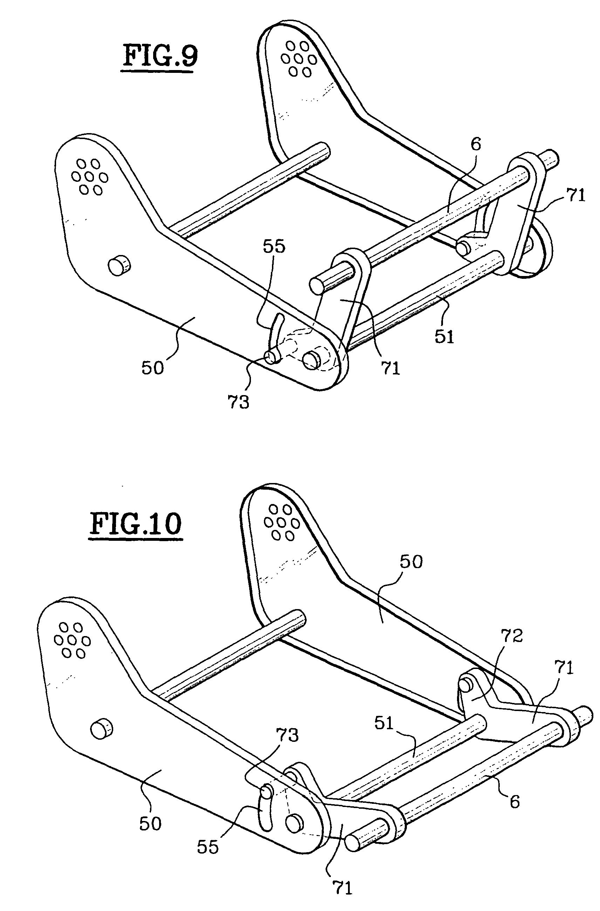

Dans une autre variante, représentée figures 5, 6 et 8, les éléments extensibles 8 sont également constitués par une bande de feuillard 85, par exemple en acier, mais qui est cette fois plane. La capacité de déformation plastique par allongement est obtenue dans cette variante par des découpes transversales réalisées dans la bande, comme on le voit bien aux figures 5 et 8. Ces découpes comportent notamment des fentes transversales 86, 87 qui peuvent être de différentes dimensions, comme illustré sur les dessins, et des échancrures 88 réalisées sur les bords de la bande. En cas de choc, sous l'effet des efforts exercés par le bassin de l'utilisateur du siège, la bande peut se déformer en s'allongeant, par écartement et ouverture des dites découpes jusqu'à former des orifices sensiblement circulaires, comme illustré figure 6. Cette déformation est consommatrice d'énergie et remplit donc la fonction d'amortissement désiré.

Un deuxième mode de réalisation de l'invention est représenté figures 9 et 10. Dans ce mode, la traverse anti-sous-marinage 6 est montée sur deux bras 71 montés pivotants autour de la traverse de liaison avant 51, comme dans le premier mode de réalisation. Les bras 71 comportent une partie coudée 72 qui s'étend parallèlement aux flasques 50 de l'armature d'assise, à proximité de ces flasques. Les parties coudées 72 portent chacune un tourillon 73 qui est inséré dans une rainure courbe 55 ménagée dans le flasque 50 correspondant, et qui peut coulisser dans la dite rainure lorsque les bras 71 pivotent vers l'avant. Cependant, les rainures 55 ont une largeur sensiblement inférieure au diamètre des tourillons 73, de manière à dissiper de l'énergie par frottement et déformation des bords de la rainure lorsque les tourillons 73 se déplacent vers le haut dans les rainures, de manière similaire à l'effet de dissipation d'énergie mentionné dans la partie introductive de ce mémoire.

Lors d'un choc avant, de manière à éviter une compression excessive des lombaires de l'utilisateur, la traverse peut s'effacer progressivement vers l'avant et vers le bas, sous la poussée exercée par le bassin de l'utilisateur, tout en restant maintenue au contact des cuisses de l'utilisateur. L'effacement est contrôlé par la déformation des bords de la rainure 55 par les tourillons 73, à partir d'un seuil déterminé de manière à maintenir l'effort transmis par la traverse 6 à l'utilisateur du siège dans des limites physiques acceptables.

L'invention n'est pas limitée aux modes de réalisation décrits précédemment. En particulier, dans le deuxième mode de réalisation ci-dessus, on pourrait réaliser les rainures dans les bras pivotants et lier les tourillons à l'armature d'assise.

On pourrait aussi utiliser d'autres formes de moyens de dissipation d'énergie.

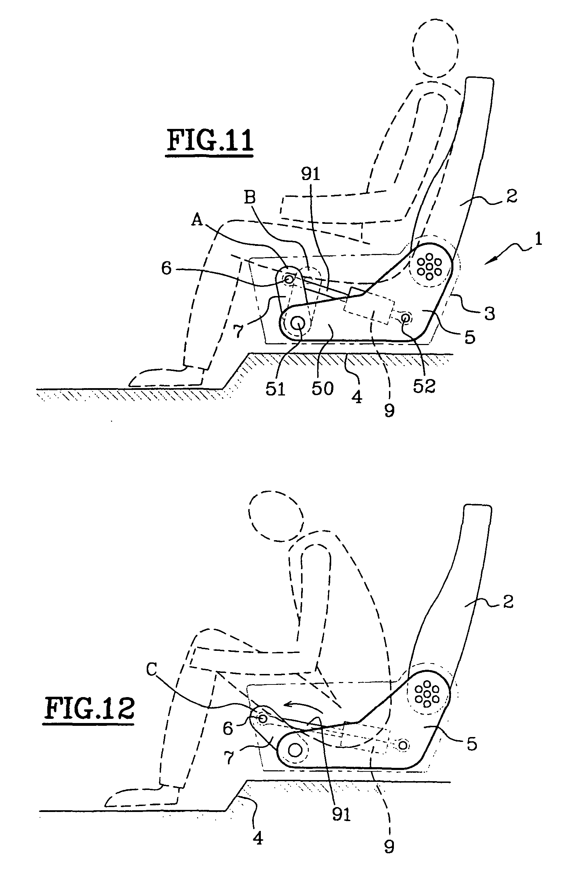

Par exemple, selon la disposition illustrée figures 11 et 12, ces moyens de dissipation d'énergie sont constitués par un ou des vérins pyrotechniques à dissipation d'énergie 9, tels que connus notamment par les documents US-A-5628469, US-A-5495790 et US-A-5526996, dont le corps est articulé sur l'armature d'assise et la tige 91 est reliée sur la traverse 6, par exemple de chaque côté du siège.

En position d'utilisation courante du siège, le vérin 9 maintient la traverse 6 dans la position de repos illustrée par la position A de la biellette 7. Lors d'un choc sur le véhicule, le vérin pyrotechnique est commandé et, en rétractant sa tige, provoque le pivotement des biellettes vers l'arrière, vers la position repérée B. Ce mouvement permet d'amener très rapidement la traverse d'anti-sous-marinage en position de rétention du bassin de l'usager. Puis le dispositif de dissipation d'énergie intégré au vérin autorise le déplacement des biellettes et de la traverse en sens inverse, vers l'avant, conformément à l'effet recherché d'amortissement du déplacement du bassin pendant la décélération. Un avantage de l'utilisation de vérin pyrotechnique à dissipation d'énergie est que le déplacement de la traverse vers l'arrière est garanti avant que ne commence la phase de dissipation d'énergie, ce qui ne serait pas forcément obtenu si l'on utilisait par exemple un vérin pyrotechnique simple en combinaison avec les dissipateurs d'énergie décrits précédemment dans les autres modes de réalisation ; en effet, il serait alors possible que l'effet de retrait du vérin pyrotechnique soit compensé par une déformation simultanée des dissipateurs d'énergie, conduisant à laisser la traverse dans sa position de repos sans la contraindre à se déplacer vers l'arrière avant la phase de dissipation d'énergie voulue.

## Revendications

1. Assise (3) d'un siège (1) de véhicule automobile, comportant une traverse d'anti-sous-marinage (6) pour limiter le déplacement du bassin d'un utilisateur vers l'avant du siège, la traverse s'étendant transversalement à l'armature (5) d'assise et pouvant se déplacer vers l'avant tout en exerçant des efforts de retenue du bassin lors de son déplacement vers l'avant du siège, l'assise comportant à cet effet des moyens de dissipation d'énergie pour contrôler, à partir d'un seuil prédéterminé, les dits efforts transmis par la traverse à l'occupant du siège, les extrémités de la traverse étant liées à des biellettes (7, 71) montées pivotantes sur l'armature d'assise, **caractérisée en ce que** les extrémités de la traverse sont fixées rigidement à l'extrémité supérieure des biellettes, et la trajectoire de la traverse (6) lors de son mouvement vers l'avant à l'encontre de l'effort de retenue exercé par les moyens de dissipation d'énergie (8, 83, 85, 55, 9), est un arc de cercle, défini par un pivotement des biellettes (7) vers l'avant.

2. Assise selon la revendication 1, **caractérisée en ce que** la position de repos de la traverse (6) est déterminée de manière que la traverse soit soumise aux efforts exercés par le bassin de l'utilisateur dès que les dits efforts atteignent le dit seuil et les dits moyens de dissipation d'énergie (8, 83, 85, 55) sont conformés de manière à agir dès que la traverse commence à se déplacer sous l'effet des forces exercées par l'utilisateur.

3. Assise selon la revendication 2, **caractérisée en ce que** les moyens de dissipation d'énergie comportent des éléments (83, 85) extensibles par déformation plastique, reliant la traverse (6) à l'armature d'assise (5), ces éléments étant disposés de manière à autoriser le déplacement de la traverse vers l'avant du siège lorsqu'ils s'allongent, et conformés de manière à s'allonger en se déformant plastiquement lorsque l'effort exercé sur la traverse atteint le dit seuil.

4. Assise selon la revendication 3, **caractérisée en ce qu'**il y a un élément extensible (83, 85) de chaque côté de l'assise.

5. Assise selon la revendication 3, **caractérisée en ce que** chaque élément extensible est constitué d'une bande de feuillard (83) ondulée transversalement.

6. Assise selon la revendication 2, **caractérisée en ce que** chaque élément extensible est constitué d'une bande de feuillard (85) comportant des découpes transversales.

7. Assise selon la revendication 6, **caractérisée en ce que** les découpes comportent des incisions (86, 87) réalisées dans la partie médiane de la bande et non débouchantes sur les bords de la bande, et qui s'écartent par déformation des dits bords lors de l'allongement de la bande.

8. Assise selon la revendication 2, **caractérisée en ce que** les moyens de dissipation d'énergie comportent une rainure (55) réalisée dans un flasque (50) de l'armature d'assise, respectivement dans une des biellettes (71), dans laquelle est inséré un pion (73) solidaire d'une des biellettes, respectivement d'un flasque d'armature d'assise, la largeur de la rainure étant sensiblement inférieure à la dimension transversale du pion, de sorte que le pion se déplace dans la rainure lors du pivotement de la biellette, en déformant les bords de la rainure.

9. Assise selon la revendication 3, **caractérisée en ce que** les éléments extensibles (83, 85) sont des feuillards de tôle d'acier.

10. Assise selon la revendication 1, **caractérisée en ce que** les moyens de dissipation d'énergie comportent au moins un vérin pyrotechnique à dissipation d'énergie (9), reliant la traverse (6) à l'armature d'assise (5) de manière que dans une première phase, le vérin déplace la traverse vers l'arrière puis, dans une deuxième phase, autorise le déplacement de la traverse vers l'avant en dissipant l'énergie fournie par la poussée du bassin sur la traverse.

## Claims

1. Seat pan (3) of an automobile vehicle seat (1) including an anti-sub-marining cross member (6) to limit the movement of the pelvis of a user towards the front of the seat, the cross member extending crosswise to the seat pan framework (5) and which can move towards the front whilst exerting pelvis retention forces during its movement towards the front of the seat, the seat pan including for this purpose energy dissipation means to control, from a predetermined threshold, said forces transmitted by the cross member to the occupant of the seat, the ends of the cross member being connected to links (7, 71) installed so as to pivot on the seat pan framework **characterised in that** the ends of the cross member are rigidly attached to the upper end of the links, and the trajectory of the cross member (6) during its movement towards the front opposing the retention force exerted by the energy dissipation means (8, 83, 85, 55, 9), is in the form of an arc of a circle, defined by a pivoting of the links (7) towards the front.

2. Seat pan in accordance with claim 1, **characterised in that** the rest position of the cross member (6) is determined so that the cross member becomes submitted to the forces exerted by the pelvis of the user when said forces reach said threshold and said energy dissipation means (8, 83, 85, 55) are shaped so as to act when the cross member starts to move under the effect of the forces exerted by the user.

3. Seat pan in accordance with claim 2, **characterised in that** the energy dissipation means include elements (83, 85) extendable by plastic deformation connecting the cross member (6) to the seat pan framework (5), these elements being arranged so as to enable the movement of the cross member towards the front of the seat when they elongate and shaped so as to elongate by deforming plastically when the force exerted on the cross member reaches said threshold.

4. Seat pan in accordance with claim 3, **characterised in that** it has an extendable element (83, 85) on each side of the seat pan.

5. Seat pan in accordance with claim 3, **characterised in that** each extendable element consists of a transversally corrugated strip (83).

6. Seat pan in accordance with claim 2, **characterised in that** each extendable element consists of a strip (85) including transverse cut-outs.

7. Seat pan in accordance with claim 6, **characterised in that** the cut-outs include cuts (86, 87) made in the centre part of the strip which do not come through to the edges of the strip and which move apart by the deformation of the said edges during the elongation of the strip.

8. Seat pan in accordance with claim 2, **characterised in that** the energy dissipation means include a groove (55) made in a flange (50) of the seat pan framework, respectively in one of the links (71), into which is inserted a pin (73) attached to one of the links, respectively a flange of the seat pan framework, the width of the groove being appreciably smaller than the transverse dimension of the pin so that the pin moves in the groove during the pivoting of the link by deforming the edges of the groove.

9. Seat pan in accordance with claim 3, **characterised in that** the extendable elements (83, 85) are steel sheet strips.

10. Seat pan in accordance with claim 1, **characterised in that** the energy dissipation means include at least one energy-dissipation pyrotechnical actuator (9), connecting the cross member (6) to the seat pan framework (5) so that, in a first phase, the actuator moves the cross member towards the rear then, in a second phase, enables the movement of the cross member towards the front by dissipating the energy supplied by the thrust of the pelvis on the cross member.

## Patentansprüche

1. Sitzeinheit (3) eines Kraftfahrzeugsitzes (1), umfassend eine abtauchhemmende Traverse (6), um die Versetzung des Beckens eines Benutzers bezüglich des Sitzes nach vorne zu begrenzen, wobei sich die Traverse transversal zur Armatur (5) der Sitzeinheit erstreckt und versetzbar ist nach vorne hin unter Ausübung von Rückhaltekräften bezüglich des Beckens während der Vorwärtsbewegung oder -versetzung davon bezüglich des Sitzes, wobei die Sitzeinheit zu diesem Zweck Energiedissipationsmittel umfasst, um ausgehend von einem vorbestimmten Schwellenwert die von der Traverse auf den Insassen des Sitzes übertragenen Kräfte zu steuern, wobei die Enden der Traverse mit Pleueln (7, 71) verbunden sind, die schwenkbar bezüglich der Armatur der Sitzeinheit montiert sind, **dadurch gekennzeichnet, dass** die Enden der Traverse starr festgelegt sind am oberen Ende der Pleuel, wobei der Pfad der Traverse (6) während der Vorwärtsbewegung davon entgegen der von den Energiedissipationsmitteln (8, 83, 85, 55, 9) ausgeübten Rückhaltekraft ein Kreisbogen ist, definiert durch ein Verschwenken der Pleuel (7) nach vorne.

2. Sitzeinheit nach Anspruch 1, **dadurch gekennzeichnet, dass** die Ruheposition der Traverse (6) derart bestimmt ist, dass die Traverse Kräften ausgesetzt ist, ausgeübt von dem Becken des Benutzers, sobald die Kräfte den Schwellenwert erreichen, wobei die Energiedissipationsmittel (8, 83, 85, 55) derart ausgelegt sind, dass sie wirken, sobald die Traverse sich zu bewegen beginnt unter dem Einfluss der von dem Benutzer ausgeübten Kräfte.

3. Sitzeinheit nach Anspruch 2, **dadurch gekennzeichnet, dass** die Energiedissipationsmittel Elemente (83, 85) umfassen, die dehnbar mittels plastischer Verformung sind, die Traverse (6) mit der Armatur der Sitzeinheit (5) verbindend, wobei diese Elemente derart angeordnet sind, dass die Versetzung der Traverse nach vorne bezüglich des Sitzes möglich ist, wenn eine Längung auftritt, und derart ausgebildet sind, dass sie einer Längung unterliegen unter plastischer Verformung, wenn die auf die Traverse ausgeübte Kraft den Schwellenwert erreicht.

4. Sitzeinheit nach Anspruch 3, **dadurch gekennzeichnet, dass** ein dehnbares Element (83, 85) an jeder Seite der Sitzeinheit vorgesehen ist.

5. Sitzeinheit nach Anspruch 3, **dadurch gekennzeichnet, dass** jedes dehnbare Element aus einem Bandeisen (83) gebildet ist, welches transversalwärts gewellt ist.

6. Sitzeinheit nach Anspruch 2, **dadurch gekennzeichnet, dass** jedes dehnbare oder längbare Element gebildet ist aus einem Bandeisen (85), transversale Ausschnitte aufweisend.

7. Sitzeinheit nach Anspruch 6, **dadurch gekennzeichnet, dass** die Ausschnitte Einschnitte (86, 87) umfassen, ausgebildet in dem mittleren Abschnitt des Bandes und nicht mündend bezüglich den Rändern des Bandes, wobei eine Beabstandung mittels Verformung der Ränder bei der Längung des Bandes auftritt.

8. Sitzeinheit nach Anspruch 2, **dadurch gekennzeichnet, dass** die Energiedissipationsmittel eine Rinne (55) umfassen, ausgebildet in einem Flansch (50) der Sitzeinheitenarmatur, jeweils in einem der Pleuel (71), wobei ein Zapfen (73), verbunden mit einem der Pleuel, darin eingeführt ist, von jeweils einem Flansch der Sitzeinheitenarmatur, wobei die Breite der Rinne im wesentlichen geringer ist als die transversale Abmessung des Zapfens, so dass der Zapfen versetzbar in der Rinne während dem Verschwenken des Pleuels unter Verformung der Ränder der Rinne ist.

9. Sitzeinheit nach Anspruch 3, **dadurch gekennzeichnet, dass** die dehnbaren oder längbaren Elemente (83, 85) Bandeisen aus Stahlblech sind.

10. Sitzeinheit nach Anspruch 1, **dadurch gekennzeichnet, dass** die Energiedissipationsmittel zumindest einen pyrotechnischen Zylinder oder Nonius zur Energiedissipation (9) umfassen, die Traverse (6) mit der Sitzeinheitenarmatur (5) derart verbinden, dass in einer ersten Phase der Nonius die Traverse nach hinten versetzt, wonach in einer zweiten Phase die Versetzung der Traverse nach vorne hin ermöglicht ist unter Dissipation der Energie, bereitgestellt mittels des Schubes des Beckens bezüglich der Traverse.
